# EUROPÄISCHE PATENTANMELDUNG

(11) **EP 0 568 717 A1**
(43) Veröffentlichungstag der Anmeldung: **10.11.1993**
(21) Anmeldenummer: 92107705.3
(22) Anmeldetag: 07.05.1992
(51) Int. Cl.: G06F 11/00

(54) **Computerprogrammgesteuertes Verfahren (Tracing) zur schrittweisen Protokollierung der Ausführung eines Zielprogrammes bezüglich der Aufrufe des Zielprogrammes durch andere Programme**

(71) Anmelder: International Business Machines Corporation, Armonk, N.Y. 10504 (US)
(72) Erfinder: Beisiegel, Michael, W-7030 Böblingen (DE); Reichert, Wolfgang, W-7038 Holzgerlichen (DE)
(74) Vertreter: Schäfer, Wolfgang, Dipl.-Ing.

(57) **Zusammenfassung**

Computergesteuertes Verfahren (Tracing) zur schrittweisen Protokollierung der Ausführung eines Zielprogrammes bezüglich des Aufrufes einer Zielroutine in diesem Zielprogramm durch andere Programme unter Berücksichtigung der Aufzeichnung von Eingabeinformation für und Ausgabeinformation von der Zielroutine. Die für diese Aufzeichnungen erforderlichen sogenannten Tracing-Instruktionen sind nicht im Zielprogramm selbst, sondern in einem separaten Tracing-Programm-Modul 3-1 untergebracht. Dieser enthält Instruktionen zur Aufzeichnung der Eingabedaten 3-3, Instruktionen zur Aufzeichnung von Ausgabedaten 3-5 und die Zieladresse der Zielroutine 3-7. Beim Aufruf der Zielroutine im Zielprogramm wird zunächst nicht diese, sondern der Tracing-Programm-Modul adressiert, in welchem die Eingabedaten aufgezeichnet werden. Durch Vorgabe der Zieladresse S erfolgt eine Programmverzweigung zur Zielroutine, nach deren Ausführung das Programm in den Tracing-Programm-Modul 3-1 zur Aufzeichnung der Ausgabedaten zurückverzweigt. Die Anwendung dieses Verfahrens, bei dem die Tracing-Instruktionen nicht mehr in der Zielroutine enthalten sind, ist besonders vorteilhaft in Betriebssystemen, welche ein dynamisches "Linken" von ausführungsbereiten Programm-Modulen vorsehen.

## Beschreibung

Die Erfindung bezieht sich allgemein auf eine Computerprogrammgesteuerte schrittweise Protokollierung der Ausführung eines Programmes. Eine solche Protokollierung wird im englischen Sprachgebrauch Tracing genannt; ein Begriff, der sich teilweise schon verdeutscht hat. Im besonderen bezieht sich das erfindungsgemäße Tracing auf ein Zielprogramm, welches durch andere Programme aufgerufen wird.

Nach dem Stand der Technik unterscheidet man zwei verschiedene Arten von Tracing:
1) ein Tracing in der Ebene von Betriebssystemen (Beispiele: Tracing von Speicherplatzanforderungen, Tracing von Dateioperationen, Tracing für betriebssystemunterstützte externe Einheiten eines EDV-Systems),
2) ein Tracing in der Ebene von Anwendungsprogrammen bezüglich der Kommunikation zwischen den Programmen.

In der elektronischen Datenverarbeitung tritt häufig die Forderung nach Zusammenarbeit von Programmen, insbesondere bei Anwendungsprogrammen auf.

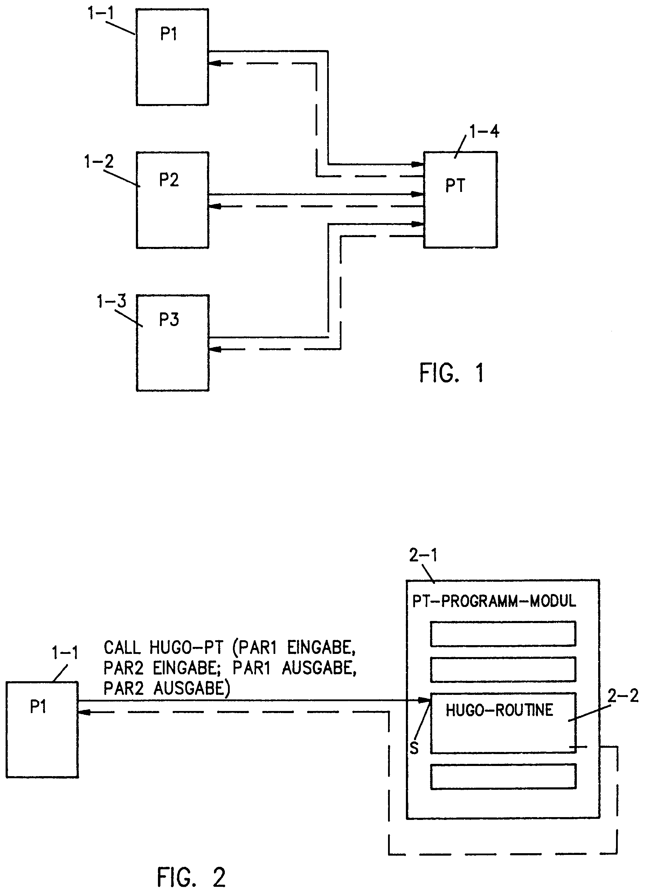

In Fig. 1 ist schematisch die Zusammenarbeit der Programme P1 (1-1), P2 (1-2) und P3 (1-3) mit einem Zielprogramm PT (1-4) dargestellt.

Bei dieser Zusammenarbeit haben die Programme P1, P2 und P3 Kenntnis von bestimmten Zielroutinen im Zielprogramm PT: z. B. unter welchem Namen, beispielsweise "HUGO" eine Zielroutine von den Programmen P1, P2 oder P3 aufgerufen werden kann, was diese Routine leistet, welche Eingabeinformation an diese Routine und welche Ausgabeinformation nach Ausführung dieser Routine an das anfordernde Programm P1, P2 oder P3 geliefert wird. In Fig. 1 ist die Anforderung durch ausgezogene Pfeile und die Rückmeldung durch gestrichelte Pfeile angedeutet.

In Fig. 2 ist schematisch das Beispiel eines Aufrufes der Zielroutine "HUGO" in dem Zielprogramm PT dargestellt. Der Aufruf erfolgt durch
"Call HUGO-PT (Par 1 Eingabe, Par 2 Eingabe; Par 1 Ausgabe, Par 2 Ausgabe)".

Dieser Aufruf führt dazu, daß im Programm-Modul PT 2-1 die an der Adresse S befindliche Routine "HUGO" 2-2 zur Ausführung kommt. Vor der Ausführung der "HUGO"-Routine wird z. B. gegebenenfalls in den symbolisch mit "Par 1 Eingabe", "Par 2 Eingabe" bezeichneten Feldern Eingabeinformation von P1 geliefert, die von der Zielroutine "HUGO" zu verarbeiten ist.

Nach Ausführung der "HUGO"-Routine werden gegebenenfalls bestimmte, durch diese Routine ermittelte Ausgabeinformationen in bestimmte, symbolisch mit "Par 1 Ausgabe" und "Par 2 Ausgabe" benannte Feldern gestellt und an P1 zurückgeliefert. Die Anforderung selbst ist in Fig. 2 wieder durch eine ausgezogene Pfeilrichtung dargestellt; die Rückmeldung nach Ausführung der "HUGO"-Routine an das Programm P1 ist durch eine gestrichelte Pfeilrichtung gekennzeichnet.

Für Test, Diagnose und Fehlerbeseitigungszwecke ist es üblicherweise erforderlich, für das Zielprogramm PT eine schrittweise Protokollierung (Tracing) bezüglich der Aufrufe von Zielroutinen durch die anfordernden Programme inkl. der Ein- und Ausgabedaten vorzunehmen. Auf diese Weise wird nachvollziehbar aufgezeichnet, daß z. B.,
o das Programm P1 eine Aufruf der Zielroutine "HUGO" im Zielprogramm PT durchführte,
o und daß hierbei bestimmte Werte für "Par 1 Eingabe", "Par 2 Eingabe" an die Zielroutine "HUGO" übergeben wurden und diese Routine ihrerseits bestimmte Ausgabenwerte über "Par 1 Ausgabe", "Par 2 Ausgabe" zurücklieferte.

Diese Aufzeichnungen geben in zeitlicher Ablauffolge bestimmte Ereignisse in der Ausführung des Programmablaufes wieder.

Auf ihrer Grundlage kann die Ausführung des Programmes PT nachvollzogen werden. Diese zur Aufzeichnung des Zugriffs und der Eingabe- bzw. Ausgabeinformation erforderlichen sogenannten Tracing-Instruktionen sind nach dem Stand der Technik Teil des Zielprogrammes PT. Mit anderen Worten, wer ein bestimmtes Tracing, eine bestimmte schrittweise Protokollierung der Zugriffe wünscht, muß dies durch "Eingriff" in das PT Programm unter Hinzufügung der dafür erforderlichen Tracing-Instruktionen tun. (Auf die durch die Tracing-Instruktion aufgezeichneten Informationen ist man beim Testen, bei der Diagnose und der Fehlerbeseitigung angewiesen.)

Das "Einbinden" solcher Tracing-Instruktionen in das Zielprogramm PT ist jedoch nachteilig: Tracing-Instruktionen erhöhen die Größe des Programm-Moduls, was sich auf die Ladezeit durch das Betriebssystem negativ auswirkt. Letzteres wird besonders kritisch, wenn das Betriebssystem in der Lage ist, bei Speichermangel bestimmte gerade nicht benötigte Programm-Module kurzfristig auszulagern und anschließend bei Referenzierung wieder neu zu laden. Außerdem werden in der Zielroutine zusätzliche Abfragen vorgesehen, ob ein Tracing erfolgen soll oder nicht.

Aus diesem Grunde ist es Aufgabe der Erfindung, eine Möglichkeit zu schaffen, die es gestattet, Tracing-Instruktionen separat vom Zielprogramm PT in einer Weise vorzusehen, daß Tracing-Anforderungen keinen Eingriff in das Zielprogramm erfordern. Des weiteren soll im Normalbetrieb (Tracing nicht erforderlich) die Ausführungsgeschwindigkeit des Zielprogramms nicht durch zusätzliche Abfragen beeinflußt werden.

Diese Aufgabe der Erfindung wird in vorteilhafter Weise durch die im kennzeichnenden Teil des Anspruchs 1 angegebenen Maßnahmen gelöst. Vorteilhafte Weiterbildungen der Erfindung sind den Unteransprüchen zu entnehmen.

Ein Ausführungsbeispiel der Erfindung ist in den Figuren dargestellt und wird im folgenden näher beschrieben. Es zeigen:
- Fig. 1: eine schematische Darstellung der Zusammenarbeit von Programm P1, P2 und P3 mit einem Zielprogramm PT;
- Fig. 2: eine schematische Darstellung des Aufrufes einer Zielroutine "HUGO" im Zielprogramm PT nach dem Stand der Technik;
- Fig. 3: eine schematische Darstellung des erfindungsgemäßen Tracing, nämlich der schrittweisen Protokollierung der Ausführung des Zielprogrammes bezüglich der Aufrufe von Zielroutinen durch andere Programme;
- Fig. 4A: eine schematische Darstellung eines statistischen Programm-Links, d. h. der statischen Verbindung von unabhängig voneinander in maschinencode-übersetzten Programm-Modulen vor Ausführung des Programmes;
- Fig. 4B: eine schematische Darstellung eines dynamischen Programm-Links während der Ausführung des Programmes.

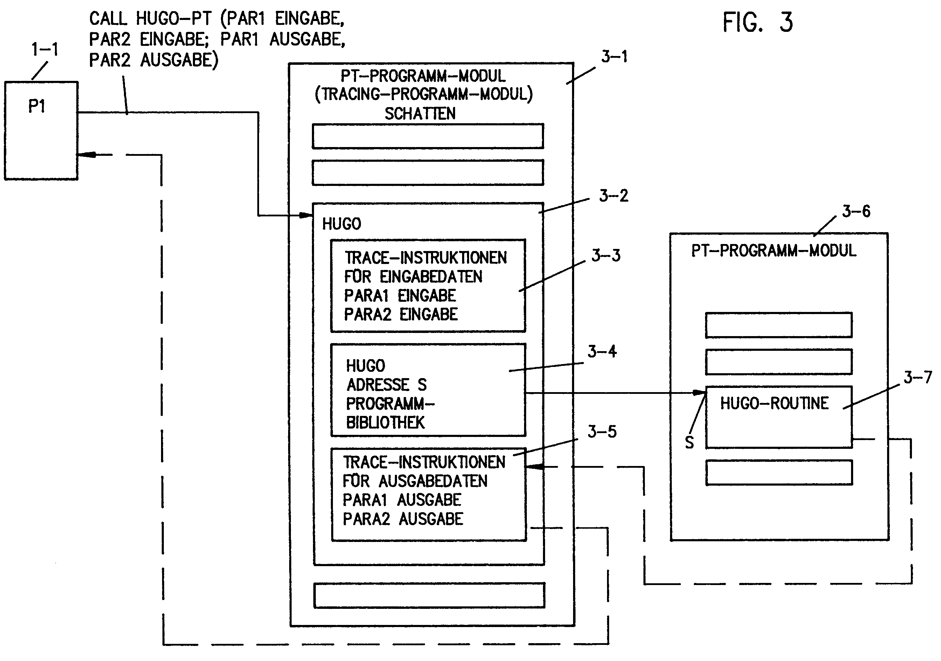

Fig. 3 zeigt eine schematische Darstellung des erfindungsgemäßen Tracings, nämlich der schrittweisen Protokollierung der Ausführung des Zielprogramms PT (3-6) bezüglich der Aufrufe von Zielroutinen durch andere Programme am Beispiel des Aufrufes der Zielroutine "HUGO" durch das Programm P1 (1-1). Der Programmaufruf soll die angenommene Form
Call HUGO-PT (Par 1 Eingabe, Par 2 Eingabe; Par 1 Ausgabe, Par 2 Ausgabe)
aufweisen. Darin bedeuten wieder
- Call: Aufruf
- "HUGO": symbolische Bezeichnung der Zielroutine "HUGO" (3-7) im Zielprogramm PT (3-6)
- PT: Zielprogramm PT (3-6)
- Par 1 Eingabe, Par 2 Eingabe: symbolisch benannte Felder für die von P1 gelieferte Eingabeinformation zur Verarbeitung durch die Routine "HUGO"
- Par 1 Ausgabe, Par 2 Ausgabe: symbolische Bezeichnung der vorstehend benannten Felder zur Aufnahme der für die von der Zielroutine "HUGO" zu lieferende Ausgabeinformation.

Das wesentliche des erfindungsgemäßen Tracings liegt in der Schaffung eines sogenannten "Schatten-Programm-Moduls" (Tracing-Programm-Moduls), welches sich adressiertechnisch wie das eigentliche Zielprogramm darstellt. Im Falle des Tracings muß sichergestellt werden, daß bei einem Aufruf zunächst auf das Tracing-Programm-Modul (und nicht das Zielprogramm) Zugriff genommen wird. Dies kann z. B. sichergestellt werden durch eine Zielsuche über einen Suchpfad, in dem sich der Tracing-Programm-Modul vor dem eigentlichen Zielprogramm befindet.

Dadurch wird sichergestellt, daß mit dem Aufruf
Call HUGO-PT ...
nicht wie in Fig. 2 direkt die Zielroutine "HUGO" (3-7) im Programm PT adressiert, sondern die mit "HUGO" (3-2) bezeichnete Routine im Tracing-Programm-Modul (3-1). Sie enthält Tracing-Instruktionen 3-3 für die Aufzeichnung der Eingabedaten "Par 1 Eingabe" und "Par 2 Eingabe".

Im Tracing-Programm-Modul muß außerdem die Anfgangsadresse S der Zielroutine "HUGO" (3-7) im Zielprogramm (3-6) zur Verfügung stehen.

Des weiteren sind im Tracing-Programm-Modul Tracing-Instruktionen 3-5 für gegebenenfalls von der "HUGO"-Zielroutine zu liefernden Ausgabedaten vorgesehen. Aufgezeichnet werden hier die Werte von "Par 1 Ausgabe" und "Par 2 Ausgabe".

Nach der Adressierung des Tracing-Programm-Moduls durch
Call HUGO-PT ...
werden dort durch die Tracing-Instruktionen 3-3 die Eingabedaten aufgezeichnet. Dann verzweigt das Programm zu der in (3-4) für "HUGO" angegebenen Adresse S (ausgezogene Pfeilrichtung) zur Ausführung der Zielroutine "HUGO" im Programm PT. Nach Ausführung dieser Routine (gestrichelte Pfeilrichtung) erfolgt eine Verzweigung zu den Tracing-Instruktionen (3-5) zur Aufzeichnung der Ausgabeinformation. Danach erfolgt, wie durch die gestrichelte Pfeilrichtung angedeutet, eine Rückverzweigung ins Programm 1-1.

(Es sei in diesem Zusammenhang bemerkt, daß, auch wenn nicht ausdrücklich hervorgehoben, selbstverständlich die Eingabedaten von P1 über den "Schatten" an die Zielroutine "HUGO" (3-7) übertragen werden und die Ausgabedaten der Zielroutine "HUGO" (3-7) über die "Schattenbibliothek" an das Programm P1 ebenfalls übertragen werden, weil diese Daten für den weiteren Programmablauf unbedingt erforderlich sind.) Das Hauptziel der Darstellung des Tracing-Programm-Moduls in Fig. 3 ist nicht der zuvorerwähnte Datenfluß, sondern mehr die Herausstellung der Tracing-Instruktionen 3-3, 3-5 und der Zugriff 3-4 auf die Zielroutine "HUGO" über die Anfangsadresse S.

Durch die "Zwischenschaltung" des Tracing-Programm-Moduls wurde das Zielprogramm PT aufgabengemäß von den Tracing-Instruktionen befreit - diese Instruktionen stehen jetzt in dem PT-Programm-Modul-Schatten (Tracing-Programm-Modul).

Die Implementierung des erfindungsgemäßen, vorstehend beschriebenen Verfahrens ist in bestimmten Betriebssystemen relativ einfach und vorteilhaft durchzuführen, sofern diese Betriebssysteme die Möglichkeit zu einem dynamischen "Link" bieten. Link bezeichnet einen Vorgang, in welchem unabhängig in Maschinensprache übersetzte Programm-Module miteinander verknüpft werden, wobei die Adreßverknüpfung der Module untereinander gewährleistet ist. Man unterscheidet dabei statische von dynamischen Link-Vorgängen.

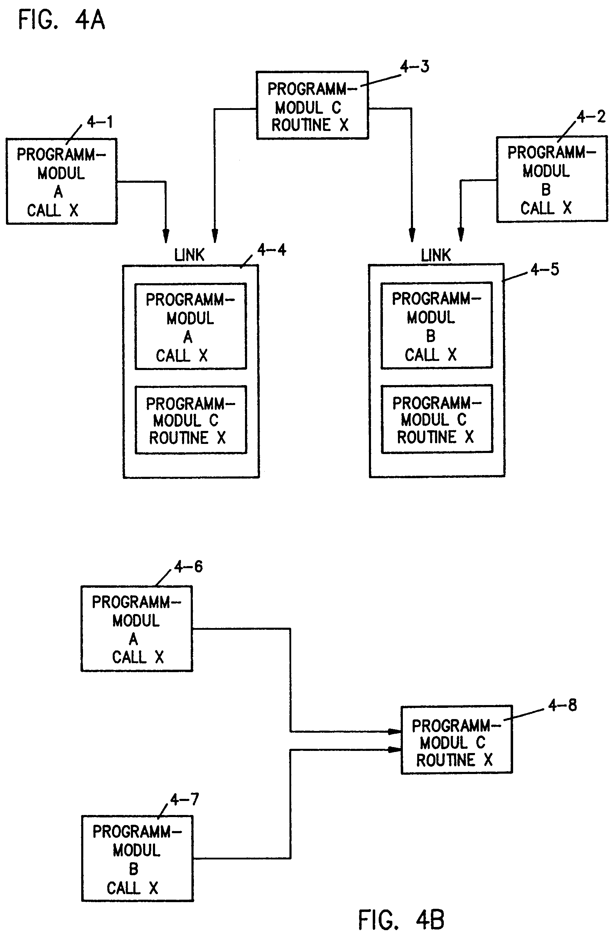

Bevor auf die Besonderheiten und Vorteile des dynamischen Link-Vorganges eingegangen wird, sei zunächst kurz das typische an einem statischen Link-Vorgang (Fig. 4A) beschrieben: Der Programm-Modul A (4-1) soll zur Befriedigung des Aufrufes
Call X
(X ist eine Routine im Programm-Modul 4-3) mit dem Programm-Modul C (4-3) statisch "gelinkt" werden. Dabei werden Programm-Modul A und C in einem vorgegebenen zusammenhängenden Adreßraum 4-4 zugeordnet, in welchem danach das aus diesen beiden "gelinkten" Programm-Modulen bestehende Programm ausgeführt wird.

Eine analoge Betrachtung ergibt sich auch für das Linken des Programm-Moduls B 4-2 mit dem Programm-Modul X 4-3.

In beiden Fällen (4-4; 4-5) ist für die "gelinkten" Module jeweils ein großer zusammenhängender Adreßraum (großer Speicherplatzbedarf) erforderlich. Der statische Link-Vorgang ist vor der Ausführung der "gelinkten" Programm-Module auszuführen.

Im Falle des im Zusammenhang mit Fig. 4B beschriebenen vorteilhafteren dynamischen Link-Vorgangs, der während der Programmausführung abläuft, sind keine größeren zusammenhängenden Adreßräume erforderlich.

Beim dynamischen "Linken" des echt lauffähigen Programm-Moduls A 4-6 mit einem ebenfalls echt lauffähigen Programm-Modul C 4-8, und beim dynamischen "Linken" des echt lauffähigen Programm-Moduls B 4-7 mit dem echt lauffähigen Programm-Modul C 4-8, der während der Programmausführung erfolgt, ist kein mehrfacher Speicherplatz für das Programm-Modul C erforderlich. Die Vorteile des dynamischen Link-Vorganges sprechen für sich: es sind keine großen zusammenhängenden Adreßräume, wie für die beim statischen Link-Vorgang gebildeten Programme erforderlich; ein dynamisch linkbares Programm-Modul wird vom Betriebssystem als eigenständige Einheit verwaltet.

Betriebssysteme, wie z. B. das IBM Betriebssystem OS/2, welches dynamische Link-Vorgänge unterstützt, gestatten eine einfache und vorteilhafte Implementierung des erfindungsgemäßen Verfahrens. Das zu tracende Programm-Modul liegt hier als dynamisch linkbares Modul vor. Wird das Programm-Modul benötigt, so muß es über den Suchpfad des Betriebssystems für solche Module erreichbar sein. Soll ein Tracing bezüglich des "Ziel-Programm-Moduls" aktiviert werden, so ist ein zugehöriges Tracing-Programm-Modul im Suchpfad (ebenfalls dynamisch linkbar) so zu plazieren, daß es vom Betriebssystem zuerst gefunden wird.

Das Tracing-Programm-Modul und das Zielprogramm haben den gleichen Namen und die gleichen Einstiegspunkte für die enthaltenen Routinen.

Für ein nicht zu aktivierendes Tracing ist das Tracing-Programm-Modul im Suchpfad auszuschließen. Diese Möglichkeit bietet das erwähnte Betriebssystem.

Hinter dem Einstiegspunkt für die Routine im Tracing-Programm-Modul steckt nicht der Code der Zielroutine; hier erfolgt das einstiegspunktspezifische Tracing der Ein- und Ausgabeparameter sowie der direkte Aufruf der Zielroutine. Im dem Tracing-Programm-Modul wird die Zieladresse der Zielroutine über das Betriebssystem OS/2 verfügbar gemacht, so daß sie nicht über den Suchpfad bestimmt werden muß. Dieser zuletzt beschriebene Betriebssystemservice wird benutzt, wenn zur Laufzeit eines Programms und nicht bereits beim Programmstart ein dynamisches Link-Modul aufgerufen wird, um Routinen darin zu adressieren.

Das IBM OS/2-Betriebssystem bietet über die Suchpfadstrategie hinaus auch die Möglichkeit, Programm-Module vor ihrem Aufruf ausführungsbereit vorzuladen und zu einem späteren Zeitpunkt bei dem Aufruf eines solchen Moduls direkt (ohne den Suchpfad zu benutzen) zu adressieren. Von dieser Möglichkeit wird für das Tracing-Programm-Modul Gebrauch gemacht.

In vorteilhafter Erweiterung des erfindungsgemäßen Verfahrens kann das Tracing-Pogramm-Modul 3-1 auch weitere Instruktionen zur Veränderung der aufgezeichneten Ein- oder Ausgabedaten enthalten. Hiervon wird z. B. besonders Gebrauch gemacht, um Reaktionen der Zielroutine auf abgeänderte Datenvorgaben zu testen.

## Patentansprüche

1. Computergesteuertes Verfahren (sogenanntes Tracing) zur schrittweisen Protokollierung der Ausführung einer Zielroutine (3-7) in einem Zielprogramm (3-6) bezüglich der Aufrufe der Zielroutine (3-7) durch andere Programm (1-1) unter Berücksichtigung der Aufzeichnung von Eingabeinformation für und Ausgabeinformation von der Zielroutine (3-7), dadurch gekennzeichnet,
daß durch den Aufruf der Zielroutine (3-7) durch ein Programm (1-1) zunächst ein Tracing-Programm-Modul (3-1) adressiert wird, welcher
Instruktionen (3-3) zur Aufzeichnung der Eingabeinformation enthält,
die Zieladresse (S) der Zielroutine (3-7) im Zielprogramm PT (3-6) und
Instruktionen (3-5) zur Aufzeichnung der Ausgabeinformation enthält,
daß im Tracing-Programm-Modul (3-1) gegebenenfalls die Instruktionen (3-3) zur Aufzeichnung von Eingabeinformation ausgeführt werden,
daß im Tracing-Programm-Modul (3-1) eine Programmverzweigung (3-4) zur Zieladresse (S) der Zielroutine erfolgt,
daß die Zielroutine (3-7) im Zielprogramm (3-6) ausgeführt wird und
anschließend eine Programmverzweigung von der Zielroutine (3-7) in den Tracing-Programm-Modul (3-1) erfolgt,
daß im Tracing-Programm-Modul (3-1) die Instruktionen (3-5) zur Aufzeichnung von Ausgabeinformation ausgeführt werden und
eine Programmverzweigung in das Programm (1-1) erfolgt.

2. Verwendung der nach dem Verfahren gemäß Anspruch 1 aufgezeichneten Information für Test-, Diagnose- und Fehlerbeseitigungszwecke.

3. Anwendung des Verfahrens gemäß Anspruch 1 in Betriebsprogrammsystemen mit dynamischen Link-Vorgängen von ausführungsbereiten Programm-Modulen mit ausführungsbereiten Zielroutinen.

4. Anwendung des Verfahrens gemäß Anspruch 3,
in Betriebssystemen mit Suchfunktion für dynamisch linkbare Programm-Module unter Hinzufügung eines vorzugebenden Tracing-Programm-Moduls (3-1).

5. Anwendung des Verfahrens nach Anspruch 4,
dadurch gekennzeichnet,
daß die Programm-Module in einem Suchpfad sequentiell derart angeordnet sind, daß bei einem Suchvorgang das Tracing-Programm-Modul (3-1) vor dem Zielprogramm (3-6) aufgefunden wird.

6. Anwendung des Verfahrens nach Anspruch 4,
dadurch gekennzeichnet,
daß das Tracing-Programm-Modul (3-1) bereits vor seinem Aufruf vom Betriebssystem ausführungsbereit geladen wird und bei einem nachfolgenden Aufruf des Zielprogramms direkt vom Betriebssystem für einen dynamsichen Link-Vorgang adressiert wird.

7. Verfahren nach einem der vorstehenden Ansprüche 1 bis 6, dadurch gekennzeichnet,
daß das Tracing-Programm-Modul (3-1) weitere Instruktionen zur Veränderung der aufgezeichneten Ein- oder Ausgabedaten enthält.
